# EUROPÄISCHE PATENTANMELDUNG

(11) **EP 1 760 129 A1**
(43) Veröffentlichungstag der Anmeldung: **07.03.2007**
(21) Anmeldenummer: 05108067.9
(22) Anmeldetag: 02.09.2005
(51) Int. Cl.: C09J 5/02, B05D 5/10

(54) **Wässrige Haftreinigerzusammensetzung zur Erhöhung der Haftung von Klebstoffen und Dichtstoffen auf Lacken**

(71) Anmelder: Sika Technology AG, 6340 Baar (CH)
(72) Erfinder: Huck, Wolf-Rüdiger, 8044 Zürich (CH); Braun, Andreas, 8404, Winterthur (CH)
(74) Vertreter: Isler, Jörg

(57) **Zusammenfassung**

Die vorliegende Erfindung betrifft Haftreinigungszusammensetzungen, welche mindestens eine Säure mit einem mindestens Schwefelatom und einem pKₐ von weniger als 2, sowie mindestens ein Benetzungshilfsmittel und Wasser umfassen.

Diese Haftreinigungszusammensetzungen verbessern die Haftung von Kleb- und Dichtstoffen auf Lacken.

## Beschreibung

### Technisches Gebiet

Die vorliegende Erfindung betrifft das Gebiet der Haftreinigerzusammensetzungen.

### Stand der Technik

Die Verwendung von Primern zur Verbesserung von Haftung von Klebstoffen und Dichtstoffen ist schon lange bekannt. Es hat sich gezeigt, dass die Haftung von Klebstoffen und Dichtstoffen auf einigen Untergründen sehr schwierig zu erreichen ist.

Lackierte Oberflächen sind ein derartiger Untergrund, welcher bekanntermassen schwierig zu verkleben ist. Speziell kritisch sind die neueren Generationen von Automobillacken in Kombination mit einkomponentigen Polyurethanklebstoffen.

Es wurde deshalb angestrebt Vorbehandlungsverfahren zu entwickeln um die Haftung auf Lacken zu erhöhen. Dies kann einerseits durch physikochemische Verfahren wie Plasmavorbehandlungen erreicht werden. Diese Verfahren sind jedoch aufwendig und bedürfen einer speziellen Apparatur, was den Einsatz dieser Vorbehandlung stark einschränkt und verteuert.

EP 1 042 419 B1 beschreibt einen Voranstrich einer Lösung einer mit Hydrocarbyl substituierten aromatischen Sulfonsäure in Alkylalkohol, oder einem aromatischen oder alkylaromatischen Lösungsmittel.

US 4,857,366 beschreibt einen Voranstrich für Lacke von p-Toluolsulfonsäure in einem Lösungsmittel, welches ausgewählt ist aus der Gruppe umfassend Ketone, Alkohole und aliphatischen Estern.

Die Verwendung von Lösungsmittel ist jedoch zunehmend problematisch aus ökologischen, ökotoxikologischen und arbeitshygienischen Gründen.

### Darstellung der Erfindung

Aufgabe der vorliegenden Erfindung ist es daher, eine Haftreinigerzusammensetzung zur Verfügung zu stellen, welche frei von organischen Lösungsmitteln ist und die Haftung von Klebstoffen oder Dichtstoffen auf Lacken verbessert.

Überraschenderweise wurde gefunden, dass eine wässrige Haftreinigungszusammensetzung gemäss Anspruch dieses Problem löst.

### Wege zur Ausführung der Erfindung

Die vorliegende Erfindung betrifft Haftreinigungszusammensetzungen, welche mindestens eine Säure mit mindestens einem Schwefelatom und einem pKₐ von weniger als 2, sowie mindestens ein Benetzungshilfsmittel und Wasser umfassen.

Unter "pKₐ" versteht der Chemiker bekannterweise den negativen dekadischen Logarithmus der Säuredissoziationskonstante Kₐ: pKₐ = -log₁₀kₐ.

Unter einem Benetzungshilfsmittel wird hier und im Folgenden eine organische Verbindung verstanden, welche in der Lage ist die Oberfläche des Wassers derart zu modifizieren, dass die Oberflächenspannung des Wassers reduziert wird und dadurch die Benetzung verbessert wird.

Die wässrige Haftreinigerzusammensetzung umfasst mindestens eine Säure mit mindestens einem Schwefelatom und einem pKₐ von weniger als 2.

Einerseits handelt es sich hierbei um anorganische Säuren um Schwefelsäuren, insbesondere Schwefelsäure, schweflige Säuren, Perschwefelsäure, Dischwefelsäure (=Pyroschwefelsäure), Dischwefelige Säure, Dithionsäure, Dithionige Säure, Thioschwefelsäure oder Thioschweflige Säure.

Andererseits handelt es sich hierbei um organische Säuren. Insbesondere handelt es sich hierbei um eine organische Sulfonsäure. Unter organischer Sulfonsäure werden Verbindungen verstanden, welche einen Kohlenstoff-Atome aufweisenden organischen Rest sowie mindestens eine funktionelle Gruppe -SO₃H aufweisen.

Die aromatische Sulfonsäure kann ein- oder mehrkernig sein und es können eine oder mehrere Sulfonsäure-Gruppen vorhanden sein. Beispielsweise können dies 1- oder 2-Napthalinsulfonsäure, 1,5-Napthalindisulfonsäure, Benzolsulfonsäure oder Alkylbenzolsulfonsäuren sein.

Bevorzugte aromatische Säuren sind diejenigen, welche die Formel (I) aufweisen

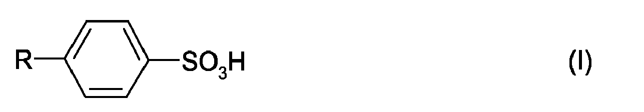

R steht hierbei für einen Alkylrest mit 1 bis 18 Atomen. Bevorzugt steht R für eine Methyl- oder Dodecyl-Gruppe, insbesondere für eine Dodecyl-Gruppe.

Die wässrige Haftreinigerzusammensetzung umfasst weiterhin mindestens ein Benetzungshilfsmittel. Als Benetzungshilfsmittel gelten einerseits Tenside. Als Tenside können natürliche oder synthetische Stoffe verwendet werden, welche in Lösungen die Oberflächenspannung des Wassers oder anderer Flüssigkeiten herabsetzen. Als Tenside, auch Netzmittel genannt, können anionische, kationische, nichtionische oder ampholytische Tenside oder deren Mischungen verwendet werden.

Beispiele für anionische Tenside sind Carboxylat-, Sulfat-, Phosphat- oder Sulfonat-Gruppen aufweisende Tenside, wie zum Beispiel Aminsäurederivate, Fettalkoholethersulfate, Fettalkoholsulfate, Seifen, Alkylphenolethoxylate, Fettalkoholethoxylate, aber auch Alkansulfonate, Olefinsulfonate oder Alkylphosphate.

Zu den nichtionischen Tensiden, den sogenannten Niotensiden, gehören beispielsweise Ethoxylate, wie zum Beispiel ethoxylierte Additionsprodukte von Alkoholen, wie beispielsweise Polyoxyalkylenpolyole, Amine, Fettsäuren, Fettsäureamide, Alkylphenole, Ethanolamide, Fettamine, Polysiloxane oder Fettsäureester, aber auch Alkyl- oder Alkylphenylpolyglykolether, wie zum Beispiel Fettalkoholpolyglykolether, oder Fettsäureamide, Alkylglykoside, Zuckerester, Sorbitanester, Polysorbate oder Trialkylaminoxide, aber auch Ester und Amide aus Poly(meth)acrylsäuren mit Polyalkylenglykolen oder Aminopolyalkylenglykole, die allenfalls einseitig mit Alklygruppen abgeschlossen sein können.

Beispiele für kationische Tenside sind quartäre Ammonium- oder Phosphoniumverbindungen, wie zum Beispiel Tetraalkylammoniumsalze, N-,N-dialkylimidazolinverbindungen, Dimethyldistearyl-ammoniumverbindungen, oder N-Alkylpyridinverbindungen, insbesondere Ammoniumchloride.

Zu den ampholytischen oder amphoterischen Tensiden gehören amphotere Elektrolyte, sogenannte Ampholyte, wie zum Beispiel Aminocarbonsäuren, und Betaine.

Derartige Tenside sind kommerziell breit erhältlich.

Als besonders geeignet sind nichtionische Tenside, insbesondere alkoxylierte Alkohole, sowie kationische Tenside auf Basis von Ammoniumsalzen. Insbesondere geeignet gezeigt haben sich alkoxylierte nichtionische Fluorotenside, insbesondere Zonyl® FSO-100, welches bei ABCR, Deutschland kommerziell erhältlich ist, alkoxylierte Alkohole oder alkoxylierte Alkylphenole, insbesondere Antrox BL-330, welches kommerziell bei Rhodia kommerziell erhältlich ist, sowie organische Ammoniumsalze mit Alkylbenzylgruppen, insbesondere Rhodaquat RP 50, welches kommerziell von Rhodia erhältlich ist.

Die Wahl des Tensides kann abhängen von der Zubereitungsart. Es gibt gewisse Tenside, die nicht über längere Zeit stabil mit der Säure sind und einerseits zu visuellen Veränderungen, wie Flocken oder Ausfällungen, führen und andererseits auch zu Veränderung in der Benetzung und Haftung führen. Mit diesen Tensiden können jedoch durchaus Haftreinigungszusammensetzungen hergestellt werde, es muss allerdings darauf geachtet werden, dass diese Zusammensetzung sofort nach der Herstellung verwendet werden. Für eine kommerzielle Verwendung ist deshalb in diesen Fällen eine zweikomponentige Verpackung zu empfehlen, in deren einen Komponente K1 die Säure und in der anderen Komponente K2 das Tensid vorhanden ist.

Deshalb ist sind bei der Auswahl des Tensides diejenigen bevorzugt, welche mit der Säure zusammen eine lagerstabile Zusammensetzung ergeben, d.h. bei denen innerhalb einer Lagerzeit von mindestens 3 Monat, insbesondere von mehr als 6 Monaten, bei Raumtemperatur oder von mindestens 1 Monat bei 50°C, keine Ausfällungen oder Trübungen ergeben. Mit derartigen Tensiden sind einkomponentige Zusammensetzungen möglich.

Als Benetzungshilfsmittel gelten andererseits organische Lösungsmittel, welche mit Wasser mischbar sind in einer Menge in der Zusammensetzung vorhanden ist, welche maximal gleich der Menge des Wassers ist.

Als derartige mit Wasser mischbaren organischen Lösungsmittel gelten insbesondere Lösungsmittel welche ausgewählt sind aus der Gruppe umfassend Methanol, Ethanol, Propanol, Isopropanol, n-Butanol, Isobutanol, tert.-Butanol, Amylalkohol; Ethylenglykol, Propylenglykol, Di- und Polyethylenglykol sowie deren Mono- und Dialkylether, Glycerin, Tetrahydrofuran, Dimethylformamid, Dimethylacetamid, N-Methylpyrrolidon, Dimethylsulfoxid Di- und Polypropylenglykol sowie deren Mono- und Dialkylether oder n- oder i-Butylenglykol, Di- und Poly(n- oder i-Butylenglykol) sowie deren Mono- und Dialkylether.

Die wässrige Haftreinigerzusammensetzung umfasst weiterhin Wasser. Das Wasser kann deionisiert oder destilliert sein. Es kann aber auch Wasser verwendet werden, in welchem Mineralien gelöst sind. Es ist jedoch darauf zu bevorzugen, dass durch das Wasser keine Verschmutzungen eingebracht werden, welche die Haftung negativ beeinflussen. Deshalb ist bevorzugt, dass das Wasser zumindest Trinkwasserqualität aufweist.

Die wässrige Haftreinigerzusammensetzung kann weitere Bestandteile umfassen, insbesondere handelt es sich hierbei um Additive, insbesondere Stabilisatoren, Emulgatoren, Biozide, insbesondere Fungizide und/oder Bakterizide, UV- und Hitzestabilisatoren, Schleifmittel, Haftvermittler, insbesondere Silane und/oder Titanate, Pigmente sowie Fluoreszenzindikatoren oder Farbstoffe. Durch die Verwendung von Farbstoffe kann beispielsweise visuell einfach überprüft werden, ob ein zu verklebendes oder abzudichtendes Substrat mit der Haftreinigerzusammensetzung behandelt wurde oder nicht. Bei der Verwendung von Fluoreszenzindikatoren ist dies unter Zuhilfenahme einer UV-Lichtquelle auch der Fall. Diese Art der Detektierung ist besonders dann vorteilhaft, wenn es sich um sichtbare Substratoberflächen handelt. So kann einerseits die Behandlung nachgewiesen werden, ist aber für den Betrachter bei normalem Tageslicht nicht sichtbar, so dass der ästhetische Aspekt nicht negativ beeinträchtigt wird.

Weiterhin als zusätzliche Bestandteile sind möglich Film bildende Polymere, welche nicht mit Wasser reagieren, welche wasserlöslich oder dispergierbar sind.

Bei all den genannten zusätzlichen Bestandteilen ist darauf zu achten, dass durch deren Verwendung in der gewählten Konzentration die Haftung von Klebstoffen oder Dichtstoffen nicht nachteilig beeinflusst wird und sich nicht negativ auf die Lagerstabilität auswirkt.

In einer bevorzugten Ausführungsform besteht die wässrigen Haftreinigungszusammensetzung lediglich aus mindestens einer Säure mit mindestens einem Schwefelatom und einem pKₐ von weniger als 2, mindestens einem Tensid und Wasser und enthält keine weitere Bestandteile, insbesondere bevorzugt ist es, wenn die Haftreinigungszusammensetzung lediglich aus einer Säure mit mindestens einem Schwefelatom und einem pKₐ von weniger als 2, einem Tensid und Wasser besteht.

Die wässrige Haftreinigungszusammensetzung weist vorzugsweise eine dynamische Viskosität von weniger als 1000 mPas, insbesondere von weniger als 100 mPas, bevorzugt weniger als 10 mPas.

Die Säure mit mindestens einem Schwefelatom und einem pKₐ von weniger als 2 ist in der wässrigen Haftreinigungszusammensetzung als freie Säure in einer Konzentration von mehr als 0.1 Gew.-%, vorzugsweise in einer Menge von 0.1 bis 10 Gew.-%, insbesondere von 0.5 bis 10 Gew.-%, bezogen auf das Gewicht der wässrigen Haftreinigungszusammensetzung vorhanden.

Unter dem Begriff "als freie Säure" ist hier und im Folgenden zu verstehen, dass die Säure in der protonierten Form und nicht in der deprotonierten Form. Dem Fachmann ist natürlich klar, die Menge der freien Form abhängt vom pH der wässrigen Zusammensetzung.

Falls es sich bei der Säure mit mindestens einem Schwefelatom und einem pKₐ von weniger als 2 um eine anorganische Säure, insbesondere um Schwefelsäure, handelt, beträgt die Menge der Säure als freie Säure vorteilhaft 0.5 bis 2 Gew.-%, bezogen auf das Gewicht der wässrigen Haftreinigungszusammensetzung.

Falls es sich bei der Säure mit mindestens einem Schwefelatom und einem pKₐ von weniger als 2 um eine organische Säure, insbesondere um eine organische Sulfonsäure handelt, beträgt die Menge der Säure als freie Säure vorteilhaft 1 bis 10 Gew.-%, bevorzugt 1 bis 5 Gew.-%, bezogen auf das Gewicht der wässrigen Haftreinigungszusammensetzung.

Weiterhin beträgt der Anteil des Wassers vorzugsweise 40 bis 99.9 Gew. %, typischerweise 90 bis 99.9 Gew.-%, insbesondere 95 bis 99.5 Gew.-%, am Gewicht der wässrigen Haftreinigungszusammensetzung.

Falls die wässrigen Haftreinigungszusammensetzung ein organisches Lösungsmittel als Benetzungshilfsmittel und/oder ein Film-bildendes Polymer enthält, beträgt der Anteil des Tensids am Gewicht der wässrigen Haftreinigungszusammensetzung beträgt der Anteil des Wassers typischerweise 40 - 90 Gew.-%, insbesondere 50 bis 70 Gew.-%, bezogen auf das Gewicht der wässrigen Haftreinigungszusammensetzung

Die wässrige Haftreinigungszusammensetzung findet insbesondere bei Lacken und Anstrichen zu deren Reinigung und Verbesserung der Haftung von Klebstoffen und Dichtstoffen auf deren Oberfläche, Verwendung. Als Lacke gelten insbesondere Beschichtungen, welche auf anderen Materialien wie beispielsweise Kunststoffe, Holz, Keramiken, Glas, Beton, Natursteine, Metalle oder Legierungen aufgebracht werden. Insbesondere handelt es sich hierbei um lackierte Metalle. Im Besonderen handelt es sich hierbei um Automobillacke, insbesondere um Automobillacke der neueren Generation, bei welchem die Klebstoffe oder Dichtstoffe vielfach Anlass für Haftprobleme Anlass geben. Derartige Lacke können beispielsweise KTL-Lacke (KTL=Kathodische Tauchlackierung) oder Mehrschichtenlacke sein. Ein typischer Automobillack weist mindestens einen Basecoat und einen Topcoat (Decklack oder Clearcoat) auf. Die verwendeten Lacke können einerseits von Modell zu Modell bzw. innerhalb unterschiedlicher Farben des gleichen Modells variieren. Die erfindungsgemässe wässrige Haftreinigungszusammensetzung ermöglicht es auf diesen problematischen Lacken eine gute Haftung zu erreichen.

Dadurch, dass bei den erfindungsgemässen wässrige Haftreinigungszusammensetzung kein organisches Lösungsmittel zum Einsatz kommt, ergibt sich der grosse Vorteil, dass auch in geschlossenen oder schlecht ventilierten Räumen gearbeitet werden kann, ohne dass aufwändige Luftabsaugeinrichtungen oder andere Arbeitsschutzmassnahmen getroffen werden müssen. Dies hat zur Folge, dass durch Verwendung der erfindungsgemässen wässrigen Haftreinigungszusammensetzung nicht nur ökologische, ökotoxikologische und arbeithygienische Vorteile sondern auch Kostenvorteile entstehen.

Ein weiterer Aspekt der Erfindung betrifft ein Verfahren zum Verkleben oder Abdichten. Dieses Verfahren zeichnet sich dadurch aus, dass es in einer Ausführungsform die Schritte umfasst:
a) Applikation der wässrigen Haftreinigungszusammensetzung auf ein zu verklebendes oder abzudichtendes Substrat **S1**
b) Applikation eines Klebstoffes oder Dichtstoffes auf die abgelüftete wässrige Haftreinigungszusammensetzung, welche sich auf dem Substrat **S1** befindet
c) Kontaktieren des Klebstoffs oder Dichtstoffes mit einem zweiten Substrat **S2;**
In einer anderen Ausführungsform umfasst es die Schritte
a') Applikation der wässrigen Haftreinigungszusammensetzung auf ein zu verklebendes oder abzudichtendes Substrat **S1**
b') Applikation eines Klebstoffes oder Dichtstoffes auf die Oberfläche eines zweiten Substrates **S2,** welche aus demselben oder unterschiedlichem Material wie das Substrat **S1** besteht,
c') Kontaktieren des Klebstoffes oder Dichtstoffes mit der abgelüfteten wässrigen Haftreinigungszusammensetzung, welche sich auf dem Substrat S1 befindet.
In einer noch anderen Ausführungsform umfasst es die Schritte
a") Applikation der wässrigen Haftreinigungszusammensetzung auf ein zu verklebendes oder abzudichtendes Substrat **S1**
b") Ablüften der wässrigen Haftreinigungszusammensetzung
c") Applikation eines Klebstoffes oder Dichtstoffes zwischen die Oberflächen des Substrates **S1** und **S2,** wobei das zweite Substrat **S2** aus demselben oder unterschiedlichem Material wie das Substrat **S1** besteht.

Das zweite Substrat **S2** kann aus demselben oder einem unterschiedlichem Material wie das Substrat **S1** bestehen. Falls es sich beim zweiten Substrat **S2** um dasselbe Substrat wie **S1** handelt, ist dieses ebenfalls mit der wässrigen Haftreinigungszusammensetzung zu reinigen. Falls **S2** ein von **S1** unterschiedliches Substrat ist, kann es je nach Material und Oberfläche von **S2,** beziehungsweise je nach Klebstoff oder Dichtstoff, notwendig sein, deren Oberfläche ebenfalls mit der wässrigen Haftreinigungszusammensetzung und/oder einer andere Vorbehandlungsmittel vorzubehandeln, um eine guten Haftung zu gewährleisten.

Es ist hierbei wesentlich, zu beachten, dass vor dem Kontaktieren des Klebstoffs oder Dichtstoffes mit der mittels wässriger Haftreinigungszusammensetzung gereinigten Oberfläche des Substrates **S1** diese abgelüftet ist, das heisst, dass das Wasser grösstenteils verdampft ist. Die Zeit, bis das Wasser braucht, um von der Oberfläche zu verdampfen wird als Ablüftzeit bezeichnet. Die Ablüftezeit ist einerseits abhängig von Luftfeuchtigkeit, Temperatur und Luftbewegungen über der Oberfläche und andererseits von der Oberflächenstruktur und der aufgetragenen Menge. Wenn eine Oberfläche mit warmer, trockener Luft angeblasen wird, wird es wesentlich kürzere Zeit dauern, bis das Wasser verdampft ist, als wenn kein Anblasen bei kalter Temperatur angewendet wird. Typischerweise ist davon auszugehen, dass die Wartezeit zwischen Applikation der wässrigen Haftreinigungszusammensetzung und Kontaktieren mit dem Kleb- oder Dichtstoff zwischen 1 Minute und 15 Minuten, insbesondere zwischen 1 und 5 Minuten beträgt.

Es ist auch möglich unmittelbar anschliessend an die Applikation der wässrigen Haftreinigungszusammensetzung mit einem Tuch wieder abzuwischen. Dies wird in der Fachwelt als "wipe-off" bezeichnet. In diesen Fällen ist die Offenzeit im wesentlichen 0 Minuten und es kann unmittelbar nach dem Abwischen der Klebstoff oder Dichtstoff appliziert werden.

Die Applikation der wässrigen Haftreinigungszusammensetzung kann auf vielfältige Art und Weise erfolgen. Aufgrund dessen, dass die Viskosität der wässrigen Haftreinigungszusammensetzung vorteilhaft gering ist, sind die Applikationsmethoden Aufsprühen und Abwischen mit einem getränkten Tuch bevorzugt.

Anschliessend an die Applikation oder während der Applikation kann auch noch eine Reiben unter angelegtem Druck erfolgen, um die Reinigung zu unterstützen.

Mit den bevorzugten Methoden wird gerade soviel wie für die Reinigung nötige Menge an Haftreinigungszusammensetzung aufgebracht und verhindert, dass sich starken Ansammlungen an Säure auf der Oberfläche ansammeln.

Nach dem Ablüften der Haftreinigungszusammensetzung können sich an der Oberfläche sichtbare Schlieren oder weissliche Rückstände oder Newton'sche Ringe bilden. Diese Rückstände lassen sich jedoch leicht durch blosses Abwischen oder durch Wasser ablösen. So entstehen beispielsweise bei der Verwendung von p-Toluolsulfonsäure als Säure vielfach weissliche Rückstände, welche unter dem Mikroskop betrachtet kristalline Strukturen aufweisen. Bei Dodecylbenzylsulfonsäure werden vielfach Schlieren festgestellt, welche im schrägen Lichteinfall in Regenbogenfarben schillern.

Es konnte jedoch in keinem Falle eine Korrosion einer Lackoberfläche, beziehungsweise, bei lackierten Metallen, des unter der Lackschicht befindlichen Metalls, beobachtet werden.

Es können diverse Klebstoffe oder Dichtstoffe verwendet werden. Je nach Verwendung und Einsatzort des verklebten oder abgedichteten Körpers kann dies ein Klebstoff oder Dichtstoff auf Epoxidharzbasis, auf Isocyanatbasis, auf (Meth)acrylaten oder auf Basis von Silanterminierten Polymeren ("STP"s) oder Silikonen sein. Es kann sich hierbei beispielsweise um Raumtemperatur-härtende Kleb- oder Dichtstoffe, um Heissschmelzklebstoffe (so genannte "hotmelts"), um Dispersionskleb- oder Dichtstoffe oder Haftklebstoffe (sogenannte "pressure sensitive adhesives") handeln.

Der Kleb- oder Dichtstoff kann einkomponentig oder mehrkomponentig sein. Bevorzugt ist der Kleb- oder Dichtstoff einkomponentig.

Am meist bevorzugt ist der Klebstoff ein feuchtigkeitshärtender einkomponentiger Polyurethankleb- oder Dichtstoff, insbesondere ein feuchtigkeitshärtender einkomponentiger Polyurethanklebstoff, wie sie beispielsweise als Sikaflex® bei Sika Schweiz AG kommerziell erhältlich sind.

Nach dem Fügen, d.h. nach dem Schritt c) beziehungsweise c') erfolgt üblicherweise das Aushärten des Klebstoffes oder Dichtstoffes (Schritt d).

Je nach Klebstoff oder Dichtstoff kann dieser Schritt sofort nach Schritt c) oder c') oder zeitverschoben erfolgen.

Die so erhaltenen verklebten oder abgedichteten Artikel sind von vielfältiger Natur. Insbesondere sind diese aus dem Gebiet der industriellen Fertigung, bevorzugt sind sie Transportmittel, insbesondere Automobile. Sie können auch Anbauteile sein. Derartige Anbauteile sind insbesondere vorgefertigte Modulteile welche an der Fertigungslinie als Module verwendet werden und insbesondere an- oder eingeklebt werden. Bevorzugt werden diese vorgefertigten Anbauteile im Transportmittelbau eingesetzt.

Als Beispiele eines derartigen Anbauteils ist die Führerkabine von Lastkraftwagen oder von Lokomotiven oder Schiebedächern für Autos.

Es sind aber auch Anwendungen im Bau von Möbeln, weissen Waren, wie Waschmaschine, Gebäudeteilen wie Fassaden oder Fahrstühle, möglich.

### Beispiele

### Zusammensetzungen mit unterschiedlichen Säuren

Es wurden wässrige Zusammensetzungen hergestellt, welche aus deionisiertem Wasser, 0.1 Gew.-% des Tensids Zonyl® FSO-100 von ABCR, Deutschland und den in Tabellen 1 und 2 angegebenen Konzentration an der angegebenen Säure (alle kommerziell erhältlich von Fluka, Schweiz) durch intensives Mischen hergestellt. Alle Lösungen waren klar und zeigten keine Trübungen.

### Experimentelles

Diese Zusammensetzungen wurden auf die unten beschriebenen Lacke **HDCT** und **RK** mittels eines mit der Zusammensetzung getränkten Zellulosetuchs (Tela®, Tela-Kimberly Switzerland GmbH) aufgetragen. Nach 10 Minuten Ablüftezeit wurde der einkomponentige feuchtigkeitshärtende Polyurethanklebstoff Sikaflex®-250 DM-2 oder Sikaflex®-250 PCT, welche beide Polyurethanprepolymere mit Isocyanatgruppen enthalten und bei Sika Schweiz AG kommerziell erhältlich sind, als Rundraupe mit einer Kartuschenpresse und einer Düse auf die haftgereinigte Lackoberfläche aufgetragen und während 7 Tagen bei 23°C und 50% rel. Luftfeuchtigkeit (Raumtemperatur-Klimalagerung: "KL") ausgehärtet und ein Drittel der Raupe mittels unten beschriebenen Haftungstest getestet. Anschliessend wurde die Probe während weiteren 7 Tagen ins Wasser bei 23°C gelegt (Wasserlagerung: "WL"). Darauf hin wurde die Haftung durch den Raupentest für ein weiteres Drittel der Raupe getestet. Darauf hin wurde der Probekörper während weiteren 7 Tagen einem Schwitzwasserklima von 100% rel. Luftfeuchtigkeit und 40°C (Schwitzwasserlagerung: "SW") ausgesetzt und danach die Haftung des letzten Drittel der Raupe ermittelt.

### Lacke

Es wurden die zwei Lacke, im Folgenden als **HDCT** beziehungsweise **RK** bezeichnet, bei Rocholl GmbH, Deutschland bezogen und weisen den folgenden Aufbau

| | | |
|---|---|---|
| | **HDCT** | **RK** |
| Metall | Cold roll steel 04x12x032" | Cold roll steel 04x12x032" |
| E-coat | Cormax 6 Kai | Cormax 6 Kai |
| Primer | HPX 1792 | 1026DG889 |
| Basecoat | DWBH201855 Beige Met. | 545540606 Silver |
| Clearcoat | HDCT 4041 (PPG) | RK 8046 (DuPont) |

Diese Lacke weisen ein schlechtes Haftungsverhalten für einkomponentige Polyurethanklebstoffe ohne Haftreinigung auf.

### Haftungstest ("Raupentest")

Die Haftung des Klebstoffes wurde mittels 'Raupentest' getestet. Hierbei wird am Ende knapp über der Klebefläche eingeschnitten. Das eingeschnittene Ende der Raupe wird mit einer Rundzange Zange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen des kohäsiven Anteils der Haftfläche:
1 = > 95 % Kohäsionsbruch
2 = 75 - 95 % Kohäsionsbruch
3 = 25 - 75 % Kohäsionsbruch
4 = < 25 % Kohäsionsbruch
5 = 0% Kohäsionsbruch (rein adhäsiver Bruch)
"RA" in der Wertung bezeichnet "Randablösung", d.h. das Bruchbild zeigt an den Raupenrändern einen adhäsiven Bruch.

Testresultate mit Kohäsionsbruchwerten von weniger als 75% gelten als ungenügend.

### Benetzung

Es wurde mit einem mit der wässrigen Zusammensetzung getränkten Zellulosetuchs (Tela®, Tela-Kimberly Switzerland GmbH) auf einen Glaskörper oder PVC Plättchen (beide von Rocholl GmbH, Deutschland), welche vorgängig durch mit Isopropanol abgewischt wurden, aufgetragen. Das Benetzungsverhalten wurde wie folgt beurteilt
- w:: Gutes Benetzen: Homogen ausgebildeter Film
- p:: Mittleres Benetzen: Nach ca. 1 Sekunde: Teilweisses Zerreissen des Films
- n:: schlechtes Benetzen: es bilden sich sofort isolierte Tropfen, die abperlen

**Tabelle 1. Haftung von Sikaflex® 250 DM-2 auf mit unterschiedlichen wässrigen Zusammensetzungen mit 0.1 Gew.-% Tensid Zonyl® FSO-100 (ABCR, Deutschland) gereinigten Lack "HDCT".**

| | **Säure** | **[Gew.-%]** | **pH** | **Haftung** | | |
|---|---|---|---|---|---|---|
| | | | | **KL** | **WL** | **SW** |
| **Ref.1** | | 0 | 6 | 5 | 5 | 5 |
| **1** | Dodecylbenzylsulfonsäure | 0.25 | 2 | 5 | 5 | 5 |
| **2** | Dodecylbenzylsulfonsäure | 0.5 | 2 | 5 | 5 | 5 |
| **3** | Dodecylbenzylsulfonsäure | 1 | 1.5 | 1 | 1 | 1 |
| **4** | Dodecylbenzylsulfonsäure | 2.5 | 1 | 1 | 1 | 1 |
| **5** | Dodecylbenzylsulfonsäure | 10 | 0.5 | 2 | 2 | 2 |
| **6** | p-Toluolsulfonsäure | 2.5 | 0.5 | 2 | 2 | 2 |
| **Ref.2** | Schwefelsäure | 0.01 | 2.5 | 5 | 5 | 5 |
| **Ref.3** | Schwefelsäure | 0.1 | 1.7 | 5 | 5 | 5 |
| **7** | Schwefelsäure | 0.5 | 1.2 | 1 | 1 | 1 |
| **8** | Schwefelsäure | 1 | 1 | 1 | 1 | 1 |
| **9** | Schwefelsäure | 2.5 | 0.5 | 5 | 5 | 5 |
| **Ref.4** | Oxalsäure | 2.5 | 0.5 | 5 | 5 | 4 |
| **Ref.5** | Trifluoressigsäure | 2.5 | 0.5 | 5 | 5 | 5 |
| **Ref.6** | Phosphorsäure | 0.5 | 1.5 | 4 | 4 | 3 |
| **Ref.7** | Phosphorsäure | 2.5 | 1 | 4 | 4 | 3 |
| **Ref.8** | Phosphorsäure | 10 | 0.5 | 4 | 4 | 3 |
| **Ref.9** | Salpetersäure | 2.5 | 0 | 4 | 4 | 4 |
| **Ref.10** | Polyphosphorsäure | 2.5 | 1 | 4 | 4 | 4 |
| **Ref.11** | Salzsäure | 0.01 | 2.5 | 5 | 5 | 5 |
| **Ref.12** | Salzsäure | 0.1 | 1.5 | 5 | 5 | 5 |
| **Ref.13** | Salzsäure | 0.5 | 0.5 | 5 | 5 | 5 |
| **Ref.14** | Salzsäure | 1 | 0 | 3 | 3 | 5 |
| **Ref.15** | Salzsäure | 2.5 | 0 | 4 | 4 | 6 |

**Tabelle 2. Haftung von Sikaflex® 250 DM-2 auf mit unterschiedlichen wässrigen Zusammensetzungen mit 0.1 Gew.-% Tensid Zonyl® FSO-100 (ABCR, Deutschland) gereinigten Lack "RK".**

| | **Säure** | **[Gew.-%]** | **pH** | **Haftung** | | |
|---|---|---|---|---|---|---|
| | | | | **KL** | **WL** | **SW** |
| **Ref.16** | | 0 | 6 | 4 | 4 | 4 |
| **10** | Dodecylbenzylsulfonsäure | 0.25 | 2 | 2 | 2RA | 2RA |
| **11** | Dodecylbenzylsulfonsäure | 0.5 | 2 | 2 | 2RA | 2RA |
| **12** | Dodecylbenzylsulfonsäure | 1 | 1.5 | 1 | 1 | 1 |
| **13** | Dodecylbenzylsulfonsäure | 2.5 | 1 | 1 | 1 | 1 |
| **14** | Dodecylbenzylsulfonsäure | 10 | 0.5 | 1 | 1 | 1 |
| **15** | p-Toluolsulfonsäure | 2.5 | 0.5 | 1 | 1 | 1 |
| **Ref.17** | Schwefelsäure | 0.01 | 2.5 | 3 | 3 | 3 |
| **Ref.18** | Schwefelsäure | 0.1 | 1.7 | 2 | 3 | 3 |
| **16** | Schwefelsäure | 0.5 | 1.2 | 1 | 2 | 2 |
| **17** | Schwefelsäure | 1 | 1 | 1 | 1 | 1 |
| **18** | Schwefelsäure | 2.5 | 0.5 | 1 | 1 | 1 |
| **Ref.19** | Oxalsäure | 2.5 | 0.5 | 2 | 2 | 2 |
| **Ref.20** | Trifluoressigsäure | 2.5 | 0.5 | 2 | 2 | 2 |
| **Ref.21** | Phosphorsäure | 0.5 | 1.5 | 2 | 3 | 3 |
| **Ref.22** | Phosphorsäure | 2.5 | 1 | 3 | 3 | 3 |
| **Ref.23** | Phosphorsäure | 10 | 0.5 | 3 | 3 | 3 |
| **Ref.24** | Salpetersäure | 2.5 | 0 | 3 | 3 | 3 |
| **Ref.25** | Polyphosphorsäure | 2.5 | 1 | 4 | 4 | 4 |
| **Ref.26** | Salzsäure | 0.01 | 2.5 | 3 | 3 | 3 |
| **Ref.27** | Salzsäure | 0.1 | 1.5 | 2 | 3 | 3 |
| **Ref.28** | Salzsäure | 0.5 | 0.5 | 2 | 3 | 3 |

### Zusammensetzungen mit unterschiedlichen Tensiden

Es wurden wässrige Haftreinigungszusammensetzungen hergestellt, welche 2.5 Gew.-% an Dodecylbenzylsulfonsäure und 0.5 Gew.-% von dem in Tabelle 3 angegebenen Tensid und deionisierten Wasser bestehen.

**Ref.29** ist eine Reinigungszusammensetzung bestehend aus Isopropanol.

**Tabelle 3. Haftung von Zusammensetzungen auf dem Lack "HDCT".**

| | **Tensid** | **Haftung** | | |
|---|---|---|---|---|
| | | **KL** | **WL** | **SW** |
| **Ref.29** | - | 5 | 5 | 5 |
| **19** | Antarox BL-330 (Rhodia) | 1 | 1 | 1 |
| **20** | Zonyl® FSO-100 (ABCR, Deutschland) | 1 | 1 | 1 |
| **21** | Hydropalat® 120 (Cognis) | 1 | 1 | 1 |

### Stabilität von einkomponentigen Zusammensetzungen mit unterschiedlichen Tensiden

Es wurden wässrige Haftreinigerzusammensetzungen hergestellt. Die erhaltenen einkomponentigen Zusammensetzungen wurden bei 50°C gelagert und nach 0, 12, 24 36 und 48 Tagen auf Benetzung und visuelle Veränderungen beurteilt. Die Zusammensetzungen bestanden aus 2.5 Gew.-% H₂SO₄, 1 Gew.-% des in Tabelle 4 angebenen Tensids sowie Wasser. In Tabelle 5 sind die analog zu Tabelle 4 angegebenen Referenzbeispiele, welche keine Säure enthalten.

**Tabelle 4. Benetzung auf Glas und PVC nach Lagerung von Tensid und Säure enthaltenden wässrigen Zusammensetzungen.**

| | Nach Lagerung bei 50°C nach Tagen: | Benetzung auf Glas | | | | | Benetzung auf PVC | | | | |
|---|---|---|---|---|---|---|---|---|---|---|---|
| | | 0 | 12 | 24 | 36 | 48 | 0 | 12 | 24 | 36 | 48 |
| **22** | Rhodaquat RP 50 (von Rhodia, Deutschland) | w | w | w | w | w | w | w | w | w | w |
| **23** | Antarox BL-330 (von Rhodia, Deutschland) | w | w | w | w | w | w | w | w | w | w |
| **24** | Rhodaclean EFC (von Rhodia, Deutschland) | w | w | p | - | - | n | N | n | n | n |
| **25** | Zonyl® FSO-100 (von ABCR, Deutschland) | w | w | w | w | w | w | w | w | w | w |
| **26** | BYK®-333 (von Byk, Deutschland) | p | w | p | - | - | p | n | n | - | - |
| **27** | Hydropalat® 120 (von Cognis) | w | w | w | w | w | w | w | w | w | w |
| **28** | Hydropalat® 875 (von Cognis) | p | w | w | w | p | p | n | p | n | n |

**Tabelle 5. Benetzung auf Glas und PVC nach Lagerung von Tensid enthaltenden wässrigen Zusammensetzungen ohne Säuren.**

| | Nach Lagerung bei 50°C nach Tagen: | Benetzung auf Glas | | | | | Benetzung auf PVC | | | | |
|---|---|---|---|---|---|---|---|---|---|---|---|
| | | 0 | 12 | 24 | 36 | 48 | 0 | 12 | 24 | 36 | 48 |
| **Ref.30** | Rhodaquat RP 50 (von Rhodia, Deutschland) | w | w | w | w | w | w | w | w | w | w |
| **Ref.31** | Antarox BL-330 (von Rhodia, Deutschland) | w | w | w | w | w | w | w | w | w | w |
| **Ref.32** | Phodaclean EFC (von Rhodia, Deutschland) | w | w | w | w | - | w | w | w | w | - |
| **Ref.33** | Zonyl® FSO-100 (von ABCR, Deutschland) | w | w | w | w | w | w | w | w | w | w |
| **Ref.34** | BYK®-333 (von Byk, Deutschland)) | w | w | w | - | - | p | n | w | - | - |
| **Ref.35** | Hydropalat® 120 (von Cognis) | w | w | w | w | w | w | w | w | w | w |
| **Ref.36** | Hydropalat® 875 (von Cognis) | w | w | w | w | w | w | w | w | w | w |

In Tabellen 6 und 7 sind die visuellen Beurteilungen dieser Zusammensetzungen **22** bis **28,** beziehungsweise **Ref.30** bis **Ref.36,** aufgeführt. Es wurden während 48 Tagen bei 50°C gelagerte Zusammensetzungen auf den Lack "HDCT" appliziert und nach 10 Minuten Ablüftezeit der Klebstoff Sikaflex®-250 DM-2, wie bereits besprochen, appliziert und dessen Haftung nach Aushärtung und Lagerung getestet.

**Tabelle 6. Visuelle Beurteilung von bei 50°C gelagerten wässrigen Zusammensetzungen. *Bodens. = Bodensatz**

| | Nach Lagerung bei 50°C nach: | Visuelle Beurteilung | | | | |
|---|---|---|---|---|---|---|
| | | 0 d | 12 d | 24 d | 36 d | 48 d |
| **22** | Rhodaquat RP 50 (von Rhodia, Deutschland) | klar | klar | klar | klar | klar |
| **23** | Antarox BL-330 (von Rhodia, Deutschland) | klar | milchig | leichter Bodens.* | milchig | milchig |
| **24** | Rhodaclean EFC (von Rhodia, Deutschland) | klar | trüb | trüb | trüb | - |
| **25** | Zonyl® FSO-100 (von ABCR, Deutschland) | klar | leichter Bodens.* | leichter Bodens.* | leichter Bodens.* | Leichter Bodens.* |
| **26** | BYK®-333 (von Byk, Deutschland)) | klar | weisse flocken | weisse flocken | - | - |
| **27** | Hydropalat® 120 (von Cognis) | klar | milchig | klar | klar | milchig |
| **28** | Hydropalat® 875 (von Cognis) | trüb | trüb | trüb | trüb | trüb |

**Tabelle 7. Visuelle Beurteilung von bei 50°C gelagerten wässrigen Zusammensetzungen ohne Säuren. *Bodens. = Bodensatz**

| | Nach Lagerung bei 50°C nach: | Visuelle Beurteilung | | | | |
|---|---|---|---|---|---|---|
| | | 0 d | 12 d | 24 d | 36 d | 48 d |
| **Ref.30** | Rhodaquat RP 50 (von Rhodia,Deutschland) | klar | klar | klar | klar | klar |
| **Ref.31** | Antarox BL-330 (von Rhodia,Deutschland) | klar | milchig | leichter Bodens.* | milchig | milchig |
| **Ref.32** | Rhodaclean EFC (von Rhodia,Deutschland) | klar | klar | klar | klar | klar |
| **Ref.33** | Zonyl® FSO-100 (von ABCR,Deuschtland) | klar | leichter Bodens.* | leichter Bodens.* | leichter Bodens.* | leichter Bodens.* |
| **Ref.34** | BYK®-333 (von Byk, Deutschland) | klar | klar | klar | - | - |
| **Ref.35** | Hydropalat® 120 (von Cognis) | klar | milchig | klar | klar | milchig |
| **Ref.36** | Hydropalat® 875 (von Cognis) | klar | klar | klar | klar | klar |

**Tabelle 8. Haftung von Klebstoff auf Lacken, auf welchen gelagerte wässrige Zusammensetzungen appliziert wurden.**

| | **Tensid** | **Haftung** | | |
|---|---|---|---|---|
| | | **KL** | **WL** | **SW** |
| **22** | Rhodaquat RP 50 (von RhodiaDeutschland) | 2 | 1 | 1 |
| **23** | Antarox BL-330 (von Rhodia, Deutschland) | 2 | 1 | 1 |
| **25** | Zonyl® FSO-100 (von ABCR, Deutschland) | 3 | 4 | 4 |
| **27** | Hydropalat® 120 (von Cognis) | 3 | 3 | 3 |
| **28** | Hydropalat® 875 (von Cognis) | 3 | 2 | 2 |

## Patentansprüche

1. Wässrige Haftreinigungszusammensetzung umfassend
- mindestens eine Säure mit mindestens einem Schwefelatom und einem pKₐ < 2;
- Wasser;
- mindestens ein Benetzungshilfsmittel
wobei die Konzentration der Säure über 0.1 Gew.-% bezogen auf das Gewicht der wässrigen Haftreinigerzusammensetzung beträgt.

2. Wässrige Haftreinigungszusammensetzung gemäss Anspruch 1, **dadurch gekennzeichnet, dass** das Benetzungshilfsmittel ein Tensid umfasst.

3. Wässrige Haftreinigungszusammensetzung gemäss Anspruch 2, **dadurch gekennzeichnet, dass** das Tensid ein alkoxyliertes nichtionisches Fluorotensid, ein alkoxylierter Alkohol, alkoxyliertes Alkylphenol oder ein organisches Ammoniumsalz mit Alkylbenzylgruppen ist.

4. Wässrige Haftreinigungszusammensetzung gemäss Anspruch 1, **dadurch gekennzeichnet, dass** das Benetzungshilfsmittel ein organisches mit Wasser mischbares Lösungsmittel ist und in einer Menge in der Zusammensetzung vorhanden ist, welche maximal gleich der Menge des Wassers ist.

5. Wässrige Haftreinigungszusammensetzung gemäss Anspruch 4, **dadurch gekennzeichnet, dass** das organische mit Wasser mischbare Lösungsmittel ausgewählt ist aus der Gruppe umfassend Methanol, Ethanol, Propanol, Isopropanol, n-Butanol, Isobutanol, tert.-Butanol, Amylalkohol; Ethylenglykol, Propylenglykol, Di- und Polyethylenglykol sowie deren Mono- und Dialkylether, Glycerin, Tetrahydrofuran, Dimethylformamid, Dimethylacetamid, N-Methylpyrrolidon, Dimethylsulfoxid Di- und Polypropylenglykol sowie deren Mono- und Dialkylether, Butandiol.

6. Wässrige Haftreinigungszusammensetzung gemäss einem der vorhergehenden Ansprüche, **dadurch gekennzeichnet, dass** die mindestens eine Säure mit mindestens einem Schwefelatom und einem pKₐ < 2 Schwefelsäure ist.

7. Wässrige Haftreinigungszusammensetzung gemäss einem der Ansprüche 1 bis 5, **dadurch gekennzeichnet, dass** die mindestens eine Säure mit mindestens einem Schwefelatom und einem pKₐ < 2 eine organische Sulfonsäure, insbesondere eine aromatische Sulfonsäure.

8. Wässrige Haftreinigungszusammensetzung gemäss Anspruch 7, **dadurch gekennzeichnet, dass** die Säure eine Säure der Formel (I) ist 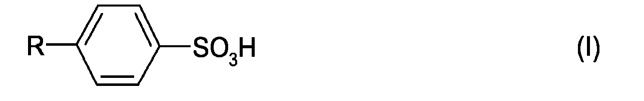 wobei R einen Alkylrest mit 1 bis 18 Atomen, insbesondere eine Methyl- oder Dodecyl-Gruppe, bevorzugt eine Dodecyl-Gruppe darstellt.

9. Wässrige Haftreinigungszusammensetzung gemäss einem der vorhergehenden Ansprüche, **dadurch gekennzeichnet, dass** der die Säure als freie Säure in einer Menge von 0.1 bis 10 Gew.-%, bezogen auf das Gewicht der wässrigen Haftreinigungszusammensetzung vorhanden ist.

10. Wässrige Haftreinigungszusammensetzung gemäss Anspruch 9, **dadurch gekennzeichnet, dass** die Säure Schwefelsäure ist und die Menge der Säure als freie Säure 0.5 bis 2 Gew.-% bezogen auf das Gewicht der wässrigen Haftreinigungszusammensetzung beträgt.

11. Wässrige Haftreinigungszusammensetzung gemäss Anspruch 9, **dadurch gekennzeichnet, dass** die Säure eine organische Sulfonsäure ist und die Menge der Säure als freie Säure 1 bis 10 Gew.-% bezogen auf das Gewicht der wässrigen Haftreinigungszusammensetzung beträgt.

12. Wässrige Haftreinigungszusammensetzung gemäss einem der vorhergehenden Ansprüche, **dadurch gekennzeichnet, dass** der Anteil des Wassers 40 bis 99.9 Gew.-%, typischerweise 90 bis 99.9 Gew.-%, insbesondere 95 bis 99.5 Gew.-% am Gewicht der wässrigen Haftreinigungszusammensetzung ausmacht.

13. Verwendung einer wässrigen Haftreinigungszusammensetzung gemäss einem der Ansprüche 1 bis 12 zur Verbesserung der Haftung von Klebstoffen oder Dichtstoffen auf lackierten Oberflächen.

14. Verfahren zur Verklebung oder zum Abdichten umfassend die Schritte
a) Applikation einer wässrigen Haftreinigungszusammensetzung gemäss einem der Ansprüche 1 bis 12 auf ein zu verklebendes oder abzudichtendes Substrat **S1**
b) Applikation eines Klebstoffes oder Dichtstoffes auf die abgelüftete wässrige Haftreinigungszusammensetzung, welche sich auf dem Substrat **S1** befindet
c) Kontaktieren des Klebstoffs oder Dichtstoffes mit einem zweiten Substrat **S2;**
oder
a') Applikation einer wässrigen Haftreinigungszusammensetzung gemäss einem der Ansprüche 1 bis 12 auf ein zu verklebendes oder abzudichtendes Substrat **S1**
b') Applikation eines Klebstoffes oder Dichtstoffes auf die Oberfläche eines zweiten Substrates **S2,** welche aus demselben oder unterschiedlichem Material wie das Substrat **S1** besteht
c') Kontaktieren des Klebstoffes oder Dichtstoffes mit der abgelüfteten wässrigen Haftreinigungszusammensetzung, welche sich auf dem Substrat **S1** befindet;
oder
a") Applikation einer wässrigen Haftreinigungszusammensetzung gemäss einem der Ansprüche 1 bis 12 auf ein zu verklebendes oder abzudichtendes Substrat **S1**
b") Ablüften der wässrigen Haftreinigungszusammensetzung
c") Applikation eines Klebstoffes oder Dichtstoffes zwischen die Oberflächen des Substrates **S1** und **S2,**
wobei das zweite Substrat **S2** aus demselben oder unterschiedlichem Material wie das Substrat **S1** besteht.

15. Verfahren gemäss Anspruch 14, **dadurch gekennzeichnet, dass** anschliessend an den Schritt c) oder c') oder c") ein Schritt d) des Aushärtens des Klebstoffes oder Dichtstoffes anschliesst.

16. Verfahren gemäss Anspruch 14 oder 15, **dadurch gekennzeichnet, dass** der Klebstoff ein feuchtigkeitshärtender einkomponentiger Polyurethanklebstoff ist.

17. Verfahren gemäss einem der Ansprüche 14 bis 16, **dadurch gekennzeichnet, dass** das Substrat **S1** ein Lack, insbesondere ein lackiertes Metall, ist.

18. Verklebter oder abgedichteter Artikel, welcher durch ein Verfahren gemäss einem der Ansprüche 14 bis 17 erhalten wurde.

19. Verklebter oder abgedichteter Artikel gemäss Anspruch 18, **dadurch gekennzeichnet, dass** der Artikel ein Transportmittel, insbesondere ein Automobil, oder ein Anbauteil eines Transportmittels, insbesondere eines Automobils, ist.
